# EUROPÄISCHE PATENTSCHRIFT

(11) **EP 2 414 466 B1**
(45) Veröffentlichungstag und Bekanntmachung des Hinweises auf die Patenterteilung: **16.10.2013**
(21) Anmeldenummer: 10705812.5
(22) Anmeldetag: 20.02.2010
(51) Int. Cl.: C09D 143/04

(54) **FEUCHTIGKEITSHÄRTENDE BESCHICHTUNGSMITTEL AUF DER BASIS APROTISCHER LÖSEMITTEL ENTHALTEND BINDEMITTEL MIT ALKOXYSILANGRUPPEN UND DEREN VERWENDUNG**
MOISTURE-CURING COATING COMPOSITIONS BASED ON APROTIC SOLVENTS, COMPRISING BINDERS HAVING ALKOXYSILANE GROUPS, AND THE USE THEREOF
AGENTS DE REVÊTEMENT DURCISSANT À L'HUMIDITÉ À BASE DE SOLVANTS APROTIQUES CONTENANT DES LIANTS COMPRENANT DES GROUPES ALCOXYSILANE ET LEUR UTILISATION

(30) Priorität: 03.04.2009 DE 102009016195
(43) Veröffentlichungstag der Anmeldung: 08.02.2012
(73) Patentinhaber: BASF Coatings GmbH, 48165 Münster (DE)
(72) Erfinder: HOFFMANN, Peter, 48308 Senden (DE); SCHNIER, Benedikt, 48231 Warendorf (DE); WESTHOFF, Elke, 48565 Steinfurt (DE); MÖLLER, Bernadette, 48734 Maria-Veen (DE)
(74) Vertreter: Steffan, Gerhard
(86) Internationale Anmeldenummer: PCT/EP2010/001070
(87) Internationale Veröffentlichungsnummer: WO 2010/112106

(56) Entgegenhaltungen:
- EP-A1- 0 400 303
- EP-A1- 0 489 918
- EP-A2- 0 497 231

## Beschreibung

Die vorliegende Erfindung betrifft feuchtigkeitshärtende Beschichtungsmittel auf Basis aprotischer Lösemittel, enthaltend mindestens ein Bindemittel mit Alkoxysilangruppen. Gegenstand der Erfindung ist außerdem ein Verfahren zur Herstellung einer Mehrschichtlackierung, insbesondere einer Autoreparaturbeschichtung, sowie die nach diesem Verfahren hergestellten Mehrschichtlackierungen.

Beschichtungsmittel enthaltend Bindemittel mit Alkoxysilangruppen sind seit langem bekannt. In Gegenwart von Luftfeuchtigkeit sind die Alkoxysilangruppen der Bindemittel bereits bei Raumtemperatur in der Lage, unter Abspaltung der Alkoxygruppen miteinander unter Ausbildung von Si-O-Si-Brücken zu kondensieren. Derartige Beschichtungsmittel sind daher beispielsweise für die Herstellung von Autoreparaturlackierungen geeignet. Dabei weisen sie gegenüber den meist eingesetzten isocyanatbasierenden Beschichtungsmitteln noch den entscheidenden Vorteil auf, dass sie toxikologisch wesentlich unbedenklicher sind und daher auf die bei isocyanatbasierenden Systemen erforderlichen umfangreichen Vorsichtsmaßnahmen weitgehend verzichtet werden kann.

Aus der EP-B-1 521 790 und der WO04/022618 sind Beschichtungsmittel bekannt, die alkoxysilanfunktionelle Prepolymere enthalten. Die alkoxysilanfunktionellen Prepolymeren sind dabei erhältlich unter Verwendung von sogenannten alpha-Silanen, bei denen die Alkoxysilylgruppe über einen Methylspacer an eine funktionelle Gruppe gebunden ist. Insbesondere werden isocyanatfunktionelle alpha-Silane und (meth)acrylfunktionelle alpha-Silane eingesetzt. Durch die Verwendung der alpha-Silane weisen die Alkoxysilylgruppen in Gegenwart von Katalysatoren, wie Aminen, eine sehr hohe Reaktivität gegenüber Feuchtigkeit auf. Es können so Beschichtungsmittel zur Verfügung gestellt werden, die bereits bei Raumtemperatur zu kratzfesten Beschichtungen härtbar sind. Nachteilig ist jedoch, dass diese Beschichtungsmittel nach Zusatz der Katalysatoren und dem Kontakt mit Luftfeuchtigkeit bei einer hohen Aushärtegeschwindigkeit nur ein sehr kurzes Potlife aufweisen, was aber bei Verwendung der Beschichtungsmittel im Bereich der Autoreparaturlackierung nicht akzeptabel ist.

Aus der WO07/048538 sind α-Ethoxysilan-modifizierte Polymere bekannt, die als Polymerrest eine Vielzahl verschiedener flexibler, langkettiger Polymerer, wie Polyester, Polyamide, Polyether, Polycarbonate, Phenolharze, Polyurethane, Vinylpolymere, Kautschuke, Cellulosen, Silikonharze, Acrylatharze oder Methacrylatharze enthalten können. Die α-Ethoxysilan-modifizierten Polymeren werden bevorzugt erhalten durch Umsetzung isocyanatgruppenhaltiger α-Ethoxysilane mit hydroxylgruppenhaltigen Polymeren, bevorzugt mit hydroxylgruppenhaltigen Polyethern, Polyestern und Polyurethanen.

Die α-Ethoxysilan-modifizierten Polymere werden in härtbaren Zusammensetzungen, wie beispielsweise in Klebstoffen, Dichtungsstoffen und Beschichtungsmitteln verwendet. Diese härtbaren Zusammensetzungen können neben den α-Ethoxysilan-modifizierte Polymeren noch bis zu 80 Gew.-% an Füllstoffen sowie Reaktiwerdünner, insbesondere Polyurethane mit wenigstens einer Alkoxysilangruppe, und/oder Weichmacher enthalten. Die härtbaren Zusammensetzungen setzen bei der Aushärtung nur wenig oder kein Methanol frei. Dabei zeichnen sie sich trotz des mit dem Austausch von Methoxysilangruppen durch Ethoxysilangruppen verbundenen geringeren Reaktivität durch eine akzeptable Aushärtezeit aus. Nachteilig bei den Beschichtungsmitteln der WO07/048538 ist aber die hohe Flexibilität und die niedrige Funktionalität der silanfunktionalisierten Polymeren, die zu unzureichenden anwendungstechnischen Eigenschaften für Autoreparaturlackierungen führt.

Aus der EP-B-505 469 und der EP-A-263 306 sind transparente Beschichtungsmittel bekannt, die alkoxysilanfunktionelle Prepolymere, ggf. Butanol und als Vernetzungskatalysator p-Toluolsulphonsäure Phosphorsäure, Zinnbasierende Verbindungen, Amine, Alkaliverbindungen oder Salze der Alkyl-Titansäure enthalten. Die alkoxysilanfunktionellen Prepolymeren sind dabei erhältlich unter Verwendung von acrylisch ungesättigten sogenannten gamma-Silanen, bei denen die Alkoxysilylgruppe über einen Propylspacer an eine Acrylat- bzw. Methacrylat-Gruppe gebunden ist. Aufgrund des Propylspacers weisen die resultierenden Prepolymeren jedoch nach Zusatz geeigneter Katalysatoren eine wesentlich geringere Reaktivität der Alkoxysilylgruppen gegenüber Luftfeuchtigkeit auf als die entsprechenden Polymeren mit einem Methylspacer. Um dennoch eine gute Aushärtung zu erreichen, sind daher hohe Katalysatormengen erforderlich, die aber zu einem unzureichenden Potlife und zu schlechten Lackeigenschaften führen. Außerdem sind aufgrund der geringen Reaktivität nur Di- und Trimethoxysilane einsetzbar, was aber wegen der damit verbundenen Methanol-Abspaltung beim Aushärten eher unerwünscht ist.

Weiterhin sind aus der DE-A-10 2005 000 823 vernetzbare, silanmodifizierte Mischpolymerisate bekannt, die durch Polymerisation von ethylenisch ungesättigten alpha-Silanen mit anderen ethylenisch ungesättigten Monomeren erhalten werden. Diese Mischpolymerisate werden in Form der wässrigen Dispersionen beispielsweise in Beschichtungsmitteln für Textilien, Fasern, Holz und Papier und bauchemischen Produkten, wie Spachteln, Putzen, Zementen u.ä. eingesetzt. Beschichtungsmittel auf Basis aprotischer Lösemittel sind jedoch nicht beschrieben. Ebenso fehlen in dieser Schrift Angaben zu geeigneten Vernetzungskatalysatoren und weiteren Additiven.

Außerdem sind aus der WO2007/033786 Beschichtungsmittel bekannt, die neben silangruppenhaltigen Polymeren als erfindungswesentlichen Bestandteil Phosphonsäurediester und Diphosphonsäurediester als Vernetzungskatalysator enthalten. Die silangruppenhaltigen Polymeren weisen mindestens 2, bevorzugt mindestens 3 kondensierbare Silangruppen auf. Bevorzugt werden dabei Umsetzungsprodukte von Isocyanaten mit Aminosilanen eingesetzt. Diese Beschichtungsmittel werden insbesondere im Bereich der Automobilserienlackierung eingesetzt. Bevorzugt erfolgt daher eine thermische Härtung bei erhöhten Temperaturen von insbesondere 100 bis 160°C während einer Zeit von 10 bis 60 min..

Schließlich sind aus der WO04/072189 Klarlacke bekannt, die neben einem silangruppenhaltigen Polyacrylatharz und einem Melaminharz als Vernetzungskatalysator für die Silangruppen blockierte oder unblockierte Phosphorsäureester enthalten. Die Verwendung von alpha-Silanen zur Herstellung der silangruppenhaltigen Polyacrylatharze ist jedoch nicht beschrieben, so dass diese Polyacrylatharze eine unzureichende Reaktivität bei niedrigen Härtetemperaturen aufweisen. Entsprechend werden die in der WO04/072189 beschriebenen Klarlacke 10 bis 45 min bei 80 bis 150°C gehärtet und für die Herstellung von OEM-Klarlackierungen eingesetzt.

Aufgrund der hohen Härtungstemperaturen der aus der WO2007/033786 und der WO04/072189 bekannten Beschichtungsmittel sind sie allerdings nicht für den Bereich der Autoreparaturlackierung geeignet.

### Aufgabe

Der vorliegenden Erfindung lag daher die Aufgabe zugrunde, Beschichtungsmittel zur Verfügung zu stellen, die auch bei niedrigen Härtungstemperaturen von maximal 90°C, insbesondere von maximal 60°C, in Gegenwart von Feuchtigkeit eine schnelle Aushärtung zeigen, d.h. sie sollten bereits nach Härtung von 30 min bei 60°C klebfrei sein. Gleichzeitig sollten die Beschichtungsmittel bei Raumtemperatur und Kontakt mit Feuchtigkeit eine Topfzeit ("Potlife") von mindestens 30 min, bevorzugt von mindestens 2 Stunden aufweisen. Unter Topfzeit versteht man dabei die Zeitspanne, innerhalb derer das Beschichtungsmittel nach Kontakt des Beschichtungsmittels mit Feuchtigkeit erste Gelteilchen zeigt.

Außerdem sollten die Beschichtungsmittel zu Beschichtungen mit einem sehr guten optischen Gesamteindruck (sogenanntem sehr gutem Appearance) führen: Es sollten daher die resultierenden Beschichtungen insbesondere frei von Oberflächenstörungen sein und eine hohe Transparenz (d.h. vor allem keine Trübung) aufweisen. Ferner sollten die Beschichtungsmittel einen möglichst geringen Anteil an Lösemitteln, also einen möglichts hohen Festkörpergehalt, aufweisen.

Schließlich sollten die Beschichtungsmittel einfach und sehr gut reproduzierbar herstellbar sein und während der Lackapplikation keine ökologischen Probleme bereiten. Bevorzugt sollten die Beschichtungsmittel außerdem bei ihrer Aushärtung möglichst wenig Methanol freisetzen.

### Lösung der Aufgabe

Im Lichte der obengenannten Aufgabenstellung wurde ein feuchtigkeitshärtendes Beschichtungsmittel auf Basis aprotischer Lösemittel gefunden, enthaltend (A) mindestens ein Bindemittel mit Alkoxysilangruppen und (B) mindestens einen Vernetzungskatalysator, dadurch gekennzeichnet, dass es
als Bindemittel (A) mindestens ein Polyacrylat und/oder Polymethacrylat, das erhältlich ist unter Verwendung eines oder mehrerer ethylenisch ungesättigter Monomerer (a1) der Formel (I) 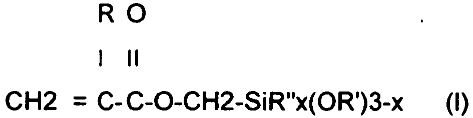 mit
- R =: Wasserstoff oder Methylrest,
- R' =: Wasserstoff, Alkyl oder Cycloalkyl,
- R" =: Alkyl, Cycloalkyl, Aryl, oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl,
- x =: 0 bis 2,
und
als Vernetzungskatalysator mindestens einen phosphor- und stickstoffhaltigen Katalysator (B),
enthält.

Vorteilhafte Ausgestaltungen des Beschichtungsmittels und des erfindungsgemäßen Verfahrens ergeben sich aus den abhängigen Patentansprüchen.

Bevorzugt enthält das Beschichtungsmittel 70,0 bis 99,0 Gew.-%, bevorzugt 85,0 bis 95,0 Gew.-%, jeweils bezogen auf das Gewicht der nicht flüchtigen Bestandteile des erfindungsgemäßen Beschichtungsmittels, mindestens eines Bindemittels (A) und/oder dass es 0,1 bis 10,0 Gew.-%, bevorzugt 0,5 bis 5,0 Gew.-%, jeweils bezogen auf das Gewicht der nicht flüchtigen Bestandteile des erfindungsgemäßen Beschichtungsmittels, mindestens eines Katalysators (B).

Gegenstand der vorliegenden Erfindung ist außerdem ein Verfahren zur Herstellung einer Mehrschichtlackierung unter Verwendung dieser Beschichtungsmittel, insbesondere zur Herstellung einer Reparaturlackierung, sowie die Anwendung dieses Verfahrens zur Beschichtung von Karosserie-Innenoder - Außenbauteilen oder von Bauteilen für den Schiff- und Flugzeugbau oder von Bauteilen für Haushalts- und Elektrogeräte oder von Kunststoffformteilen oder Folien.

Bevorzugt wird bei dem Verfahren zur Herstellung einer Mehrschichtlackierung auf ein gegebenenfalls vorbeschichtetes Substrat eine pigmentierte Basislackschicht und danach eine Klarlackschicht aufgetragen, dadurch gekennzeichnet, dass die Klarlackschicht eine Schicht aus dem Beschichtungsmittel nach einem der Ansprüche 1 bis 10 ist.

Bevorzugt ist die Mehrschichtlackierung eine Reparaturlackierung, insbesondere eine Autoreparaturlackierung, oder eine Nutzfahrzeuglackierung oder eine Lackierung von Kunststoffformteilen oder Kunststoff-Anbauteilen.

Im Hinblick auf den Stand der Technik war es überraschend und für den Fachmann nicht vorhersehbar, dass die Aufgaben, die der vorliegenden Erfindung zugrunde lagen, mit Hilfe des erfindungsgemäßen Beschichtungsmittels auf Basis aprotischer Lösemittel gelöst werden konnten.

So ist es insbesondere überraschend, dass die erfindungsgemäßen Beschichtungsmittel sowohl in Gegenwart von Feuchtigkeit eine schnelle Aushärtung zeigen - d.h. sie sind bereits nach Härtung von 30 min. bei 60°C klebfrei - als auch gleichzeitig eine Topfzeit ("Potlife") von mindestens 30 min, bevorzugt von mindestens 2 Stunden aufweisen. Durch die zumindest anteilige Verwendung von acrylat- bzw. methacrylatfunktionellen Alkoxysilanen mit Ethoxy- anstelle von Methoxygruppen zur Herstellung der Bindemittel können außerdem Beschichtungsmittel zur Verfügung gestellt werden, die bei der Aushärtung möglichst wenig Methanol freisetzen und die trotzdem die geforderte schnelle Aushärtung zeigen.

Weiterhin führen die erfindungsgemäßen Beschichtungsmittel zu Beschichtungen mit einem sehr guten optischen Gesamteindruck (sogenanntem sehr gutem Appearance). Die resultierenden Beschichtungen sind dabei insbesondere frei von Oberflächenstörungen und weisen eine hohe Transparenz auf. Ferner zeichnen sich die erfindungsgemäßen Beschichtungsmittel durch einen im Vergleich zu Beschichtungsmitteln auf Basis hydroxylgruppenhaltiger Acrylatharze mit gleichem Molekulargewicht höheren Festkörpergehalt aus.

Schließlich sind die Beschichtungsmittel einfach und sehr gut reproduzierbar herstellbar und bereiten während der Lackapplikation keine ökologischen Probleme.

### Beschreibung der Erfindung

### Bindemittel (A) mit Alkoxysilangruppen

Es ist erfindungswesentlich, dass die Beschichtungsmittel als Bindemittel (A) mindestens ein Polyacrylat und/oder Polymethacrylat enthalten, das erhältlich ist unter Verwendung eines oder mehrerer ethylenisch ungesättigter Monomerer (a1) der Formel (I) 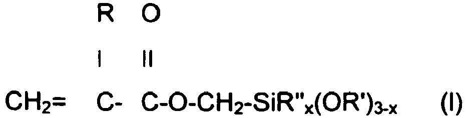 mit
R = Wasserstoff oder Methylrest,
R' = Wasserstoff, Alkyl oder Cycloalkyl, bevorzugt R' = Alkylrest, insbesondere mit 1 bis 4 C-Atomen, ganz besonders R' = Ethyl und/oder Methyl,
R" = Alkyl, Cycloalkyl, Aryl, oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R" = Alkylrest, insbesondere mit 1 bis 6 C-Atomen,
x = 0 bis 2, insbesondere x = 0 bis 1, besonders bevorzugt x = 0.

Beispiele für ethylenisch ungesättigte Monomere der Formel (I) sind alpha-Methacryloxymethylmethoxydimethylsilan, alpha-Methacryloxymethyldimethoxymethylsilan, alpha-Methacryloxymethyltrimethoxysilan, alpha-Methacryloxymethylethoxydimethylsilan, alpha-Methacryloxymethyldiethoxymethylsilan, alpha-Methacryloxymethyltriethoxysilan, alpha-Methacryloxymethyltriisopropoxysilan, alpha-Methacryloxymethyldiisopropoxymethylsilan, alpha-Methacryloxymethylisopropoxydimethylysilan, alpha-Methacryl-oxymethyltris(2-methoxyethoxy)silan, alpha-Methacryloxymethylbis(2-methoxyethoxy)methylsilan, alpha-Methacryloxymethyltripropoxysilan, alpha-Methacryloxymethyldipropoxymethylsilan, alpha-Methacryloxymethylpropoxydimethylsilan und alpha-Methacryloxymethyl(2-methoxyethoxy)-dimethylsilan, alpha-Acryloxymethylmethoxydimethylsilan, alpha-Acryloxy-methyldimethoxymethylsilan, alpha-Acryloxymethyltrimethoxysilan, alpha-Acryloxymethylethoxydimethylsilan, alpha-Acryloxymethyldiethoxymethylsilan, alpha-Acryloxymethyltriethoxysilan, alpha-Acryloxymethyltriisopropoxysilan, alpha-Acryloxymethyldiisopropoxymethylsilan, alpha-Acryloxymethylisopropoxydimethylsilan, alpha-Acryloxymethyltris(2-methoxy-ethoxy)silan, alpha-Acryloxymethyltripropoxysilan, alpha-Acryloxymethyldipropoxymethylsilan, alpha-Acryloxymethylbis(2-methoxyethoxy)methylsilan, alpha-Acryloxymethylpropoxydimethylsilan und alpha-Acryloxymethyl(2-methoxyethoxy)dimethylsilan. Diese alpha-Silane können einzeln oder auch in Form von Mischungen von 2 oder von mehreren alpha-Silanen zur Herstellung der Bindemittel mit Alkoxysilangruppen eingesetzt werden.

Bevorzugt werden ethoxysilylgruppenhaltige Bindemittel eingesetzt. Gegenüber methoxysilylgruppenhaltigen Bindemitteln weisen sie den Vorteil auf, dass bei ihrer Aushärtung das toxikologisch unbedenklichere Ethanol und nicht das toxikologisch bedenkliche Methanol freigesetzt wird. Bevorzugt sind daher Beschichtungsmittel, die als Bindemittel (A) mindestens ein Polyacrylat und/oder Polymethacrylat enthalten, das erhältlich ist unter Verwendung eines oder mehrerer ethylenisch ungesättigter Monomerer der Formel (II) 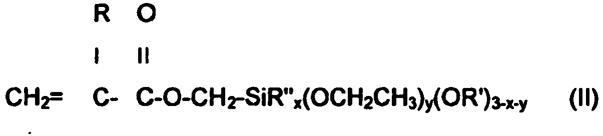 wobei R, R' und R" die oben angegebene Bedeutung haben und
x = 0 bis 2, bevorzugt x = 0 bis 1 und besonders bevorzugt x = 0,
y = 1 bis 3, bevorzugt y = 2 bis 3, und
1 < x + y < 3, bevorzugt 2 < x+y < 3 ist.

Bevorzugt werden daher als ethylenisch ungesättigte Monomere der Formel (II) alpha-Methacryloxymethylethoxydimethylsilan, alpha-Methacryloxy-methyldiethoxymethylsilan, alpha-Methacryloxymethyltriethoxysilan, alpha-Acryloxymethylethoxydimethylsilan, alpha-Acryloxymethyldiethoxymethylsilan und/oder alpha-Acryloxymethyltriethoxysilan eingesetzt. Besonders bevorzugt werden alpha-Methacryloxymethyldiethoxymethylsilan, alpha-MethacryloxymethyLtriethoxysilan, alpha-Acryloxymethyldiethoxymethylsilan und/- oder alpha-Acryloxymethyltriethoxysilan eingesetzt.

Für die Herstellung der erfindungsgemäß eingesetzten Bindemittel (A) können ggf. zusammen mit dem oder den ungesättigten Monomeren (a1) der Formel (I) und/oder dem oder den ungesättigten Monomeren der Formel (II) ein oder mehrere weitere ethylenisch ungesättigte Monomere eingesetzt werden. Als weitere ethylenisch ungesättigte Monomere kommen üblicherweise eingesetzte ethylenisch ungesättigte Monomere, bevorzugt aber ethylenisch ungesättigte Monomere ohne aktiven Wasserstoff zum Einsatz.

Bevorzugt sind daher Beschichtungsmittel, bei denen das Bindemittel (A) mit Alkoxysilangruppen erhältlich ist durch Polymerisation von
(a1) einem oder mehreren ethylenisch ungesättigten Monomeren (a1) der Formel (I) und/oder der Formel (II),
ggf. einem oder mehreren Alkylestern von ethylenisch ungesättigten Carbonsäuren (a2) und/oder
ggf. einer oder mehreren vinylaromatischen Verbindungen (a3) und/oder ggf. einem oder mehrerer ethylenisch ungesättigter Monomeren (a4) mit mindestens zwei polymerisierbaren, ethylenisch ungesättigten Doppelbindungen und/oder
ggf. einem oder mehreren weiteren, von den Monomeren (a1) bis (a4) verschiedenen ethylenisch ungesättigten Verbindungen (a5).

Als Monomer (a2) geeignet sind insbesondere Alkylester von ethylenisch ungesättigten Carbonsäuren ohne aktiven Wasserstoff, besonders bevorzugt Alkylester ohne weitere funktionelle Gruppe, ganz besonders bevorzugt Alkylester von gesättigten Monoalkoholen mit ethylenisch ungesättigten Carbonsäuren. Beispiele für derartige Alkylester von ethylenisch ungesättigten Carbonsäuren (a2) sind Alkylester und Cycloalkylester der Acryl-, Methacryl-, Fumar-, Croton- und Maleinsäure, bevorzugt der Acryl- und/oder Methacrylsäure, wie vorzugsweise Methylacrylat, Methylmethacrylat, Ethylacrylat, Ethylmethacrylat, Propylacrylat, Propylmethacrylat, Isopropylacrylat, Isopropylmethacrylat, Butylacrylat, Butylmethacrylat, Isobutylacrylat, Isobutylmethacrylat, tert-Butylacrylat, tert-Butylmethacrylat, Amylacrylat, Amylmethacrylat, Hexylacrylat, Hexylmethacrylat, Ethylhexylacrylat, Ethylhexylmethacrylat, 3,3,5-Trimethylhexylacrylat, 3,3,5-Trimethylhexylmethacrylat, Stearylacrylat, Stearylmethacrylat, Laurylacrylat oder Laurylmethacrylat, Cycloalkyl-acrylate und/oder Cycloalkylmethacrylate, wie Cyclopentylacrylat, Cyclopen-tylmethacrylat, Isobornylacrylat, Isobornylmethacrylat, Cyclohexylacrylat und/oder Cyclohexylmethacrylat.

Als Monomer (a3) geeignet sind insbesondere vinylaromatische Verbindungen ohne aktiven Wasserstoff. Beispiele für geeignete vinylaromatische Verbindungen (a3) sind vinylaromatische Kohlenwasserstoffe wie Vinyltoluol, alpha-Methylstyrol oder insbesondere Styrol.

Als Monomer (a4) geeignet sind insbesondere ethylenisch ungesättigte Verbindungen mit mindestens zwei polymerisierbaren, ethylenisch ungesättigten Doppelbindungen ohne aktiven Wasserstoff. Beispiele für geeignete ethylenisch ungesättigte Monomere (a4) mit mindestens zwei polymerisierbaren, ethylenisch ungesättigten Doppelbindungen sind Diester von gesättigten Dialkoholen mit ethylenisch ungesättigten Carbonsäuren, insbesondere Diester von gesättigten Dialkoholen mit der Acryl-, Methacryl-, Fumar-, Croton- und Maleinsäure, bevorzugt der Acryl- und/oder Methacrylsäure, wie beispielsweise Hexandioldiacrylat, Hexandioldimethacrylat, Glykoldiacrylat, Glykoldimethacrylat, Butandioldiacrylat, Butandioldimethacrylat, Trimethylolpropantriacrylat und Trimethylolpropantrimethacrylat. Ferner kann das Monomer (a4) auch eine mit einem ungesättigten, eine polymerisierbare Doppelbindung enthaltenden Alkohol veresterte Polycarbonsäuren sein. Schließlich kann als Monomer (a4) auch ein Umsetzungsprodukt eines Polyisocyanats und eines ungesättigten Alkohols oder eines Amins verwendet werden. Als Beispiel hierfür sei das Reaktionsprodukt aus einem Mol Hexamethylendiisocyanat und zwei Mol Allylalkohol oder das Reaktionsprodukt aus Isophorondiisocyanat und Hydroxiethylacrylat genannt.

Als weitere, von den Monomeren (a1) bis (a4) verschiedene ethylenisch ungesättigte Verbindungen (a5) werden insbesondere siliciumfreie Monomere ohne aktiven Wasserstoff, wie z.B. Nitrile der Acryl- oder Methacrylsäure, Vinylester oder Vinylether eingesetzt. Um eine schnellere Wasseraufnahme bei der Vernetzung unter dem Einfluss von Luftfeuchtigkeit zu ermöglichen, kann es vorteilhaft sein, wenn als zusätzliches Comonomer (a5) zu den ethylenisch ungesättigten Monomeren (a1) bis (a4) bis zu 10 Gew.-%, bezogen auf die Summe von (a1) bis (a5), eines ethylenisch ungesättigten Carbonsäureamids verwendet werden. Als Beispiele für geeignete Carbonsäureamide seien Acrylsäureamid, Methylacrylsäureamid, Itakonsäurediamid, α-Ethylacrylamid, Crotonsäureamid, Fumarsäureamid und Maleinsäurediamid genannt.

Besonders bevorzugt sind Beschichtungsmittel, bei denen das Bindemittel (A) mit Alkoxysilangruppen erhältlich ist durch Polymerisation von
(a1) 10 bis 50 Gew.-%, bevorzugt 15 bis 40 Gew.-%, besonders bevorzugt 20 bis 35 Gew.-%, eines oder mehrerer ethylenisch ungesättigter Monomerer (a1) der Formel (I) und/oder der Formel (II),
(a2) 15 bis 85 Gew.-%, bevorzugt 25 bis 60 Gew.-%, eines oder mehrerer Alkylester von ethylenisch ungesättigten Carbonsäuren,
(a3) 0 bis 50 Gew.-%, bevorzugt 10 bis 30 Gew.-%, eines oder mehrerer, vinylaromatischer Verbindungen,
(a4) 0 bis 20 Gew.-%, bevorzugt 0 bis 10 Gew.-%, eines oder mehrerer ethylenisch ungesättigter Monomerer mit mindestens zwei polymerisierbaren, ethylenisch ungesättigten Doppelbindungen und
(a5) 0 bis 40 Gew.-%, bevorzugt 0 bis 20 Gew.-%, eines oder mehrerer weiterer, von den Monomeren (a1) bis (a4) verschiedener ethylenisch ungesättigter Verbindungen,
wobei die Summe der Gewichtsanteile der Monomeren (a1) bis (a5) jeweils 100 Gew.-% ergibt.

Die erfindungsgemäß ganz besonders bevorzugten Polyacrylatpolyole sind in der Regel Copolymerisate und weisen vorzugsweise zahlenmittlere Molekulargewichte Mw zwischen 1.000 und 20.000u (Dalton), insbesondere zwischen 1.500 und 10.000u (Dalton) auf, jeweils gemessen mittels Gelpermeationschromatographie (GPC) gegen einen Polymethylmethacrylatstandard.

Die radikalische Polymerisation zur Herstellung der Bindemittel mit Alkoxysilangruppen wird üblicherweise in einem organischen Lösemittel bei Temperaturen von 80 -180° C, vorzugsweise bei 90 -160° C, durchgeführt. Vorteilhafterweise wird die radikalische Polymerisation zur Herstellung des Alkoxysilangruppen enthaltenden Polymerisats so durchgeführt, dass eine Lösung des Polymerisats mit einem Festkörper-Gehalt von 40 bis 85 Gew.-% resultiert.

Als Lösemittel für die radikalische Polymerisation kommen nichtreaktive Lösemittel, wie beispielsweise Ester, wie z.B. Ethylacetat, Propylacetat, n-Butylacetat, iso-Butylacetat, Etherester wie z. B. Methoxypropylacetat oder Butylglykolacetat, Ketone wie Aceton, Methylethylketon, Methylisobutylketon oder Cyclohexanon, Ether, aromatische, aliphatische, araliphatische und/- oder cycloaliphatische Kohlenwasserstoffe und Ketone sowie Mischungen der genannten Lösemittel in Frage. Bevorzugt werden n-Butylacetat-, iso-Butylacetat, Solventnaphtha und/oder Xylol eingesetzt.

Die Polymerisationsreaktion wird üblicherweise in Gegenwart eines Initiators und ggf. in Gegenwart eines Polymerisationsreglers ohne aktive OH- oder NH-Gruppen ausgeführt, wobei bevorzugt Mercaptosilane als Regler verwendet werden. Beispiele für geeignete Regler sind die in der internationalen Patentanmeldung WO88/02010 beschriebenen Verbindungen.

Als Initiatoren kommen Azoinitiatoren, wie beispielsweise Azobisisobutyronitril in Frage. Bei einem niedrigen bzw. fehlenden Anteil am eingesetzten mehrfach ethylenisch ungesättigten Monomer (a4) werden insbesondere Peroxiester als Initiatoren verwendet. Als Beispiel hierfür seien Di-tert.-Butylperoxid, Di-tert.-Amylperoxid, tert.-Amylperoxi-2-ethylhexanoat und tert.-Butylperoxi-2-ethylhexanoat genannt. Selbstverständlich können auch AzoInitiatoren mit reaktiven Silicongruppen verwendet werden, wie sie z.B. in EP-A-159 715 und EP-A-159 716 beschrieben sind.

Die Bindemittel (A) mit Alkoxysilangruppen werden in den erfindungsgemäßen Beschichtungsmitteln bevorzugt in einer Menge von 70,0 bis 99,0 Gew.-%, besonders bevorzugt von 85,0 bis 95,0 Gew.-%, jeweils bezogen auf das Gewicht der nicht flüchtigen Bestandteile des erfindungsgemäßen Beschichtungsmittels, eingesetzt. Ferner enthalten die erfindungsgemäßen Beschichtungsmittel üblicherweise zwischen 20 und 45 Gew.-%, insbesondere zwischen 30 und 40 Gew.-%, jeweils bezogen auf das Gesamtgewicht des Beschichtungsmittels, eines oder mehrerer Lösemittel , wobei die Menge Lösemittel ohne Berücksichtigung der Reaktiwerdünner angegeben ist.

### Katalysator (B)

Als Katalysator (B) werden phosphor- und stickstoff-haltige Katalysatoren eingesetzt. Dabei können auch Mischungen aus zwei oder mehreren verschiedenen Katalysatoren (B) eingesetzt werden.

Beispiele für geeignete aminblockierte phosphorhaltige Katalysatoren (B) sind aminblockierte substituierte Phosphonsäurediester und/oder aminblockierte substituierte Diphosphonsäurediester, vorzugsweise aus der Gruppe bestehend aus aminblockierten acyclischen Phosphonsäurediestem, aminblockierten cyclischen Phosphonsäurediestem, aminblockierten acyclischen Diphosphonsäurediestern und aminblockierten cyclischen Diphosphonsäurediestem und/oder aminblockierte Phosphorsäurediester und/oder aminblockierte substituierte Phosphorsäuremonoester und/oder aminblockierte substituierte Phosphorsäuretriester. Derartige unblockierte, zur Herstellung der jeweiligen aminblockierten Katalysatoren (B) geeignete Phosphonsäurediester und Diphosphonsäurediester sind beispielsweise in der deutschen Patentanmeldung DE-A-102005045228 beschrieben.

Bevorzugt enthält das Beschichtungsmittel als Katalysator (B) mindestens einen mit einem gesättigten tertiären Amin blockierten substituierten Phosphonsäurediester und/oder Diphosphonsäurediester und/oder Phosphorsäuremonoester und/oder Phosphorsäurediester, insbesondere aminblockiertes Bis-2-ethylhexylphosphat, ganz besonders mit Triethylamin und/oder 1,4-Diazabicyclo(2.2.2)octan blockiertes Bis-2-ethylhexylphosphat.

In den erfindungsgemäßen Beschichtungsmitteln werden bevorzugt Katalysatoren oder Mischungen verschiedener Katalysatoren eingesetzt, die ggf. unter Zusatz entsprechender Lösemittel, eine ausreichende Löslichkeit im Beschichtungsmittel aufweisen, so dass eine Auskristallisation des Katalysators vermieden wird.

Insbesondere werden aber zur Herstellung der aminblockierten phosphorhaltigen Katalysatoren (B) substituierte Phosphorsäuremonoester, Phosphorsäurediester und Phosphorsäuretriester, vorzugsweise aus der Gruppe, bestehend aus acyclischen Phosphorsäuremonoestern, acyclischen Phosphorsäurediestern und cyclischen Phosphorsäurediestern sowie acyclischen Phosphorsäuretriestern eingesetzt. Dabei werden die acyclischen Phosphorsäurediester (B) und acyclischen Phosphorsäuretriester insbesondere aus der Gruppe, bestehend aus acyclischen Phosphorsäurediestern (B) und acyclischen Phosphorsäuretriestern der allgemeinen Formel (III): 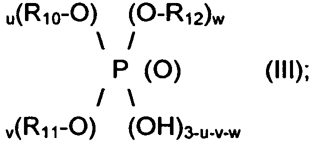 ausgewählt, wobei
u = 0 bis 3, v = 0 bis 3, w = 0 bis 3 und u+v+w <= 3 sind
und
die Reste R₁₀, R₁₁ und R₁₂ aus der Gruppe, bestehend aus:
- substituiertem und unsubstituiertem Alkyl- mit 1 bis 20, vorzugsweise 2 bis 16 und insbesondere 2 bis 10 Kohlenstoffatomen, Cycloalkyl- mit 3 bis 20, vorzugsweise 3 bis 16 und insbesondere 3 bis 10 Kohlenstoffatomen und Aryl- mit 5 bis 20, vorzugsweise 6 bis 14 und insbesondere 6 bis 10 Kohlenstoffatomen,
- substituiertem und unsubstituiertem Alkylaryl-, Arylalkyl-, Alkylcycloalkyl-, Cycloalkylalkyl-, Arylcycloalkyl-, Cycloalkylaryl-, Alkylcycloalkylaryl-, Alkylarylcycloalkyl-, Arylcycloalkylalkyl-, Arylalkylcycloalkyl-, Cycloalkylalkylaryl-und Cycloalkylarylalkyl-, wobei die hierin enthalten Alkyl-, Cycloalkyl- und Arylgruppen jeweils die vorstehend aufgeführte Anzahl von Kohlenstoffatomen enthalten und
- substituiertem und unsubstituiertem Rest- der vorstehend aufgeführten Art, enthaltend mindestens ein, insbesondere ein, Heteroatom, ausgewählt aus der Gruppe bestehend aus Sauerstoffatom, Schwefelatom, Stickstoffatom, Phosphoratom und Siliziumatom, insbesondere Sauerstoffatom, Schwefelatom und Stickstoffatom
ausgewählt werden und zusätzlich auch Wasserstoff darstellen können (Teilversterung).

Beispiele für als Katalysator (B) geeignete aminblockierte Phosphorsäureester sind aminblockiertes Tributylphosphat, aminblockiertes Tris(2-ethylhexyl)phosphat, aminblockiertes Bis(2-ethylhexyl)phosphat, aminblockiertes 2-Ethylhexylphosphat, aminblockiertes Tris(butoxyethyl)phosphat, aminblockiertes Tris(lauryltriethylenglykol)phosphat, aminblockiertes Bis-(lauryltriethylenglykol)phosphat, aminblockiertes Mono(lauryltriethylenglykol)-phosphat, aminblockiertes Dihexadecylphosphat, aminblockiertes Diisononylphosphat, aminblockiertes Monoisodecylphosphat und aminblockierte handelsübliche Alkylphosphate, wie z.B. aminblockiertes Korantin SMK der Firma BASF SE.

Bevorzugt werden als Katalysator (B) aminblockierte Phosphorsäuremonoester und aminblockierte Phosphorsäurediester, insbesondere aminblockierte C₂- bis C₁₈-Alkylphosphate, wie beispielsweise aminblockiertes Dibutylphosphat, aminblockiertes Bis(2-ethylhexyl)phosphat, aminblockiertes 2-Ethylhexylphosphat, aminblockiertes Dihexadecylphosphat, aminblockiertes Diisononylphosphat, aminblockiertes Monoisodecylphosphat, bevorzugt aminblockierte C₆- bis C₁₀-Alkylphosphate sowie Mischungen aus zwei oder mehreren der genannten Katalysatoren eingesetzt. Insbesondere werden hier aminblockierte Phosphorsäuremonoethylhexylester, aminblockierte Phosphorsäurediethylhexylester, aminblockierte Phosphorsäurephenylester sowie Mischungen der genannten Katalysatoren, ganz besonders bevorzugt amin-blockierter Phosphorsäure-bis(2-ethylhexyl)ester eingesetzt.

Als Beispiele für Amine, mit welchem die Phosphorsäureester bzw. Phosphonsäureester blockiert werden, sind insbesondere tertiäre Amine, beispielsweise bicyclische Amine, wie z. B. Diazabicyclootan (DABCO), Diazabicyclononen (DBN), Diazabicycloundecen (DBU), Dimethyldodecylamin oder Triethylamin, zu nennen. Besonders bevorzugt werden zur Blockierung der phosphorhaltigen Katalysatoren tertiäre Amine eingesetzt, die eine gute Wirksamkeit des Katalysators bei den Härtungsbedingungen von maximal 90 °C gewährleisten und die bevorzugt einen Siedepunkt < 100°C bei einem Druck von 1013,25 mbar aufweisen. Ganz besonders bevorzugt wird daher Triethylamin zur Blockierung der phosphorhaltigen Katalysatoren eingesetzt.

Bestimmte, mit Amin blockierte Phosphorsäurekatalysatoren sind auch kommerziell erhältlich (z.B. Nacure-Typen der Fa. King Industries). Beispielsweise sei der unter der Bezeichnung Nacure 4167 von der Firma King Industries als besonders geeigneter Katalysator auf der Basis eines Amin - blockierten Phosphorsäureteilesters genannt.

Die Katalysatoren werden vorzugsweise in Anteilen von 0,1 bis 10,0 Gew.-%, besonders bevorzugt in Anteilen von 0,5 bis 5,0 Gew.-%, ganz besonders bevorzugt in Anteilen von 0,5 bis 3,0 Gew.-%, jeweils bezogen auf das Gewicht der nicht flüchtigen Bestandteile des erfindungsgemäßen Beschichtungsmittels, eingesetzt. Eine geringere Wirksamkeit des Katalysators kann dabei durch entsprechend höhere Einsatzmengen teilweise kompensiert werden.

### Aliphatischer Monoalkohol (C)

Bevorzugt enthalten die erfindungsgemäßen Beschichtungsmittel noch einen oder mehrere, vom Lösemittel verschiedene aliphatische Monoalkohole (C), da durch diesen Zusatz die Topfzeit der Beschichtungsmittel verlängert wird. Beispiele für geeignete Monoalkohole (C) sind insbesondere aliphatische primäre Monoalkohole mit 2 bis 4 Kohlenstoffatomen, wie z.B. Ethanol, Propanol und n-Butanol. Bevorzugt werden n-Propanol und/oder n-Butanol eingesetzt.

Die Komponente (C) wird bevorzugt in einer Menge von 0 bis 20,0 Gew.-%, insbesondere in einer Menge von 0,5 bis 10,0 Gew.-%, jeweils bezogen auf das Gewicht der nicht flüchtigen Bestandteile des erfindungsgemäßen Beschichtungsmittels, eingesetzt.

### Weitere Komponenten des Beschichtungsmittels

Die Beschichtungsmittel können ggf. noch einen oder mehrere Reaktivverdünner enthalten. Beispiele für geeignete Reaktiwerdünner sind monomere und/oder oligomere silangruppenhaltige Verbindungen, insbesondere carbamatfunktionelle Silane und/oder vinylfunktionelle Silane. Als Beispiele für geeignete Reaktiwerdünner seien N-Trimethoxysilylmethyl-O-methylcarbamat und N-Dimethoxy(methyl)silylmethyl-O-methylcarbamat, Vinyldimethoxymethylsilan, Vinyltriethoxysilan, Vinyltrimethoxysilan und Vinyltris(2-methoxyethoxy)silan genannt.

Die Reaktiwerdünner werden bevorzugt in einer Menge von 0 bis 20 Gew.-%, insbesondere in einer Menge von 0,5 bis 10,0 Gew.-%, jeweils bezogen auf das Gewicht der nicht flüchtigen Bestandteile des erfindungsgemäßen Beschichtungsmittels, eingesetzt.

Die Beschichtungsmittel enthalten in der Regel weniger als 5 Gew.-%, insbesondere weniger als 2 Gew.-%, jeweils bezogen auf das Gewicht der nicht flüchtigen Bestandteile des erfindungsgemäßen Beschichtungsmittels, und besonders bevorzugt gar kein Isocyanat. Außerdem enthalten die erfindungsgemäßen Beschichtungsmittel in der Regel weniger als 5 Gew.-%, insbesondere weniger als 2 Gew.-%, jeweils bezogen auf das Gewicht der nicht flüchtigen Bestandteile des erfindungsgemäßen Beschichtungsmittels, und besonders bevorzugt gar kein Aminoplastharz.

Darüber hinaus kann das erfindungsgemäße Beschichtungsmittel mindestens ein übliches und bekanntes Lackadditiv in wirksamen Mengen, d.h. in Mengen vorzugsweise bis zu 30 Gew.-%, besonders bevorzugt bis zu 25 Gew.-% und insbesondere bis zu 20 Gew.-%, jeweils bezogen auf das Gewicht der nichtflüchtigen Bestandteile des Beschichtungsmittels, enthalten.

Beispiele geeigneter Lackadditive sind:
- insbesondere UV-Absorber;
- insbesondere Lichtschutzmittel wie HALS-Verbindungen, Benztriazole oder Oxalanilide;
- Radikalfänger;
- Slipadditive;
- Entschäumer;
- Netzmittel wie Siloxane, fluorhaltige Verbindungen, Carbonsäurehalbester, Phosphorsäureester, Polyacrylsäuren und deren Copolymere oder Polyurethane;
- Haftvermittler wie Tricyclodecandimethanol;
- Verlaufmittel;
- filmbildende Hilfsmittel wie Cellulose-Derivate;
- Füllstoffe wie beispielsweise Nanopartikel auf der Basis von Siliziumdioxid, Aluminiumoxid oder Zirkoniumoxid; ergänzend wird noch auf das Römpp Lexikon »Lacke und Druckfarben« Georg Thieme Verlag, Stuttgart, 1998, Seiten 250 bis 252, verwiesen;
- rheologiesteuernde Additive, wie die aus den Patentschriften WO 94/22968, EP-A-0 276 501, EP-A-0 249 201 oder WO 97/12945 bekannten Additive; vernetzte polymere Mikroteilchen, wie sie beispielsweise in der EP-A-0 008 127 offenbart sind; anorganische Schichtsilikate wie Aluminium-Magnesium-Silikate, Natrium-Magnesium- und Natrium-Magnesium-Fluor-Lithium-Schichtsilikate des Montmorillonit-Typs; Kieselsäuren wie Aerosile; oder synthetische Polymere mit ionischen und/oder assoziativ wirkenden Gruppen wie Polyvinylalkohol, Poly(meth)acrylamid, Poly(meth)acrylsäure, Polyvinylpyrrolidon, Styrol-Maleinsäureanhydrid- oder Ethylen-Maleinsäure-anhydrid-Copolymere und ihre Derivate oder hydrophob modifizierte ethoxylierte Urethane oder Polyacrylate;
- und /oder Flammschutzmittel.

Bevorzugt ist das Beschichtungsmittel transparent.

In einer weiteren Ausführungsform der Erfindung kann das erfindungsgemäße Beschichtungsmittel noch weitere Pigmente und/oder Füllstoffe enthalten und zur Herstellung pigmentierter Topcoats dienen. Die dafür eingesetzten Pigmente und/oder Füllstoffe sind dem Fachmann bekannt.

Die Herstellung der erfindungsgemäßen Beschichtungsmittel erfolgt nach üblichen Methoden, indem das alkoxysilangruppenhaltige Bindemittel (A), organisches Lösemittel, ggf. der aliphatische Monoalkohol (C) sowie Hilfs- und Zusatzstoffe durch Mischen und ggf. Dispergieren zu einer Überzugsmasse verarbeitet werden und kurz vor der Anwendung der Katalysator (B) zugemischt wird.

### Applikation und Aushärtung der Beschichtungsmittel sowie Verwendung der resultierenden Beschichtungen

Die Applikation der erfindungsgemäßen Beschichtungsmittel kann durch alle üblichen Applikationsmethoden, wie z.B. Spritzen, Rakeln, Streichen, Tauchen, Gießen, Tränken, Träufeln oder Walzen erfolgen. Dabei kann das zu beschichtende Substrat als solches ruhen, wobei die Applikationseinrichtung oder -anlage bewegt wird. Indes kann auch das zu beschichtende Substrat, insbesondere ein Coil, bewegt werden, wobei die Applikationsanlage relativ zum Substrat ruht oder in geeigneter Weise bewegt wird.

Vorzugsweise werden Spritzapplikationsmethoden angewandt, wie zum Beispiel Druckluftspritzen, Airless-Spritzen, Hochrotation, elektrostatischer Sprühauftrag (ESTA), pneumatische Spritzapplikation mit einer Sprühpistole, wobei die pneumatische Spritzapplikation mit einer Sprühpistole besonders bevorzugt ist.

Die Härtung erfindungsgemäßen Beschichtungsmittel weist keine Besonderheiten auf, sondern kann bei Umgebungstemperatur oder erhöhten Temperaturen von bis 200°C erfolgen. Im Falle der Verwendung der Beschichtungsmittel für die Autoreparaturlackierung oder für die Beschichtung von Kunststoff-Anbauteilen erfolgt die Härtung bei Umgebungstemperatur oder bei leicht erhöhten Temperaturen von maximal 90°C, insbesondere von maximal 60°C, erfolgen. Die thermische Härtung bei Temperaturen von maximal 90°C kann mit üblichen und bekannten Vorrichtungen, wie Heizgebläsen sowie Heizstrahlern, die nahes und fernes Infrarot abstrahlen, erfolgen. Die angewandten Temperaturen und die Dauer der Erwärmung richten sich nach den Erfordernissen des Einzelfalls, insbesondere nach der Reaktivität der thermisch härtbaren Bestandteile, und können vom Fachmann in einfacher Weise aufgrund seines allgemeinen Fachwissens und seines handwerklichen Könnens ausgewählt und eingestellt werden.

Vorteilhafterweise erfolgt die Härtung bei einer Temperatur von 20 bis 90°C, bevorzugt 40 bis maximal 60°C, während einer Zeit von 1 min bis zu 10 h, besonders bevorzugt 20 min bis zu 5 h.

Aufgrund der Härtung bei niedrigen Temperaturen sind die beschriebenen Beschichtungsmittel insbesondere für die Reparaturlackierung von Pkw-Karosserien einschl. der Reparaturlackierung von Originallackierungen in der Linie und/oder für die Beschichtung von Kunststoffformteilen oder Kunststoff-Anbauteilen für Pkw-Karosserien, insbesondere für Karosserien von Pkw der Oberklasse, wie z. B. für die Herstellung von Dächern, Heckklappen, Motorhauben, Kotflügeln, Stoßstangen, Spoilern, Schwellern, Schutzleisten, seitlichen Verkleidungen u.ä., geeignet. Sie können aber auch für die Erstlackierung von Karosserien von Fortbewegungsmitteln (insbesondere Kraftfahrzeuge, wie Motorräder, Busse, LKW oder PKW) oder von Teilen hiervon oder von Bauteilen für den Schiff- und Flugzeugbau, die Automobilserienlackierung; für die Beschichtung von Bauwerken im Innen- und Außenbereich; von Möbeln, Fenstern und Türen; von Kunststoffformteilen, insbesondere CDs und Fenster; von industriellen Kleinteilen, von Coils, Containern und Emballagen; von weißer Ware; von Bauteilen für Haushalts- und Elektrogeräte, von Folien; von optischen, elektrotechnischen und mechanische Bauteilen sowie von Glashohlkörpern und Gegenständen des täglichen Bedarfs eingesetzt werden.

Die erfindungsgemäßen Beschichtungsmittel liefern neue gehärtete Beschichtungen, insbesondere Reparaturlackierungen, mit einem sehr guten optischen Gesamteindruck (sogenanntem sehr gutem Appearance). Die resultierenden Beschichtungen sind dabei insbesondere frei von Oberflächenstörungen und weisen eine hohe Transparenz auf. Daneben zeichnen sich die erfindungsgemäßen Beschichtungsmittel durch eine schnelle Aushärtung in Gegenwart von Feuchtigkeit aus und weisen gleichzeitig eine Topfzeit ("Potlife") von mindestens 30 min., insbesondere von mindestens 2 h auf. Durch die zumindest anteilige Verwendung von acrylat- bzw. methacrylatfunktionellen Alkoxysilanen mit Ethoxy- anstelle von Methoxygruppen zur Herstellung der Bindemittel können außerdem Beschichtungsmittel zur Verfügung gestellt werden, die bei der Aushärtung möglichst wenig Methanol freisetzen und die trotzdem die geforderte schnelle Aushärtung zeigen.

### Beispiele

### 1. Herstellung der Alkoxysilangruppen enthaltenden Bindemittel A1 bis A3 (erfindungsgemäß) und des Bindemittels A4 (Vergleich)

In einem, mittels Ölumlaufthermostat beheizbaren, doppelwandigen 4-I Edelstahlkessel, ausgestattet mit Thermometer, Ankerrührer, 2 Tropftrichtern und Rückflußkühler wird das in Tabelle 1 angebene Lösungsmittel zur Polymerisation vorgelegt (= Vorlage). In einem der Tropftrichter wird die in Tabelle 1 angebene Monomerenmischung, in dem zweiten Tropftrichter die in Tabelle 1 angebene Intiatorlösung vorgelegt. Die Vorlage wird auf eine Polymerisationstemperatur von 145°C aufgeheizt. Nach Erreichen der Polymerisationstemperatur wird zunächst der Initiatorzulauf gestartet. 15 Minuten nach Beginn des Initiatorzulaufes wird der Monomerenzulauf (Dauer 240 Minuten) gestartet. Der Initiatorzulauf wird so eingestellt, daß er nach Beendigung des Monomerenzulaufes noch weitere 30 Minuten nachläuft. Nach Beendigung des Initiatorzulaufes wird die Mischung für weitere 2h bei 145°C gerührt.

**Tabelle 1: Zur Herstellung der Bindemittel (A1) bis (A4) verwendetete Komponenten**

| | | Beispiel 1 (A1) | Beispiel 2 (A2) | Beispiel 3 (A3) | Vgl.-beisp. 1 (A4) |
|---|---|---|---|---|---|
| | Komponente | Gew.-TI. | Gew.-TI. | Gew.-TI. | Gew.-TI. |
| Vorlage | Solventnaphtha | 42,0 | 42,0 | 42,0 | 42,0 |
| Monomerenmischung | n-Butylacrylat | 15,0 | 15,0 | 15,0 | 15,0 |
| | n-Butylmethacrylat | 10,0 | 10,0 | 10,0 | 10,0 |
| | Methylmethacrylat | 20,0 | 20,0 | 20,0 | 20,0 |
| | Styrol | 25,0 | 25,0 | 25,0 | 25,0 |
| | Geniosil XL 36¹⁾ (Methacryloyloximethylentriethoxysilan) | 30,0 | | | |
| | Geniosil XL 34²⁾ ((Methacryloyloximethyl)methyldiethoxisilan) | | 30,0 | | |
| | Geniosil XL 33³⁾ (Methacryloyloximethyltrimethoxysilan) | | | 30,0 | |
| | 3-Methacryloyloxypropyltriethoxysilan⁴⁾ | | | | 30 |
| Initiatorlösung | di-tert. Butylperoxid | 3,0 | 3,0 | 3,0 | 3,0 |
| | Solventnaphtha | 12,0 | 12,0 | 12,0 | 12,0 |

| | | | | | |
|---|---|---|---|---|---|
| Erläuterungen zu Tabelle 1: ¹⁾ Handelsübliches Methacryloyloximethyltriethoxisilan der Firma Wacker-Chemie AG ²⁾ Handelsübliches (Methacryloyloximethyl)methyldiethoxisilan der Firma Wacker-Chemie AG ³⁾ Handelsübliches Methacryloyloximethyltrimethoxisilan der Firma Wacker-Chemie AG ⁴⁾Handelsprodukt der Shin-Etsu Chemical Ltd. Japan | | | | | |

**Tabelle 2: Kennzahlen der Bindemittel (A1) bis (A4)**

| | Beispiel 1 | Beispiel 2 | Beispiel 3 | Vergleichsbeispiel V1 |
|---|---|---|---|---|
| Bindemittel | (A1) | (A2) | (A3) | (A4) |
| Festkörper 1h 130°C | 65,6% | 66,1 | 66,6 | 65,4 |
| Säurezahl [mgKOH/g] | 0,9 | 1,2 | 0,8 | 0,4 |
| Viskosität ICI-Platte Kegel⁵⁾ | 12,4 | 13,2 | 10,4 | 19,3 |
| Mₙ⁶⁾ | 3874 u (Dalton) | 3449 u (Dalton) | 3041 u (Dalton) | 3977 u (Dalton) |
| M_{w}⁶⁾ | 22568 u (Dalton) | 15567 u (Dalton) | 6945 u (Dalton) | 13650 u (Dalton) |

| | | | | |
|---|---|---|---|---|
| Erläuterungen zu Tabelle 2: ⁵⁾ Viskosität gemessen bei 22°C mit Hilfe des ICI-Platte-Kegel-Viskosimeters nach der Herstellung der Bindemittel beim in Tabelle 1 angegebenen Festkörpergehalt ("Anfall-Viskosität") ⁶⁾ gemessen mittels Gelpermeationschromatographie (GPC) gegen einen Polymethylmethacrylatstandard | | | | |

### 2. Herstellung der erfindungsgemäßen Beschichtungsmittel der Beispiele 1 bis 3 und des Beschichtungsmittels des Vergleichsbeispiels V1 und daraus hersgestellte Beschichtungen

Aus den in Tabelle 3 angegebenen Komponenten werden durch Vermischen die Beschichtungsmittel der erfindungsgemäßen Beispiele 1 bis 3 und des Vergleichsbeispiels V1 hergestellt. Die so erhaltenen Beschichtungsmittel werden danach direkt auf je 2 Glastafeln mittels eines Kastenrakels in einer Naßfilmdicke von ca 100µm aufgezogen. Eine Glastafel läßt man bei Raumtemperatur lagern, die andere wird nach 15 minütigem Ablüften für 30 Minuten bei 60°C im Umluftofen getrocknet. Die Beurteilung der Lacke geschieht nach folgenden Kriterien:

### Potlife:

Es wird beurteilt, wann der Lack erste Gelteilchen zeigt.

### Klebfreiheit mittels Zappon-Tack Test (ZTT):

Ein Aluminiumstreifen einer Dicke von ca 0,5 mm, einer Breite von 2,5 cm und einer Länge von ca 11 cm wird so in einem 110° Winkel gebogen, dass eine Fläche von 2,5 X 2,5 cm entsteht. Die lange Seite des Bleches wird nach weiteren 2,5 cm um ca 15° so gebogen, dass das Blech durch ein auf der quadratischen Fläche zentriert platziertes Gewicht von 5 g gerade in Balance gehalten wird. Zur Messung der Klebfreiheit nach ZTT wird das gebogene Blech auf dem Lackfilm platziert und für 30 s mit einem Gewicht von 100g beschwert. Nach Entfernung des Gewichtes wird der Lack als klebfrei angesehen, wenn der Blechwinkel innerhalb von 5 s umfällt. Der Test wird in Abständen von 15 Minuten wiederholt. Vor Einsatz des Tests wird die Klebrigkeit des Lackfilms qualitativ durch Berührung beurteilt.

### Pendelhärte:

Die Härte der Lackfilme wird mittes Pendeldämpfung nach Koenig gemäß DIN 53157 bestimmt. Angegeben sind die Pendelschläge.

**Tabelle 3: Zusammensetzung der Beschichtungsmittel in Gew.- Teilen und Prüfergebnisse der resultierenden Beschichtung**

| Komp. | Beisp. 1 | Beisp. 2 | Beisp. 3 | Vergl.- bsp. V1 |
|---|---|---|---|---|
| Bindemittel (A1) | 18,3 | | | |
| Bindemittel (A2) | | 18,3 | | |
| Bindemittel (A3) | | | 18,3 | |
| Bindemittel (A4) | | | | 18,3 |
| Propanol | 1,0 | 1,0 | 1,0 | 1,0 |
| Butylacetat | 0,3 | 0,3 | 0,3 | 0,3 |
| Nacure 4167 ¹⁾ | 0,36 | 0,36 | 0,36 | 0,36 |
| Potlife | >6h | >5h | 38min | 2h30 min |
| (ZTT) RT ²⁾ | 2h50 min | 4h50 min | 2h42 min | 4h |
| (ZTT) 30'60°C ³⁾ | 5min | 5min | 5min | 5min |
| Pendelh. 1 Tag RT ⁴⁾ | 47 | 40 | 54 | 27 |
| Pendelh. 3 Tage RT ⁵⁾ | 62 | 52 | 69 | 46 |
| Pendelh. 7 Tage RT ⁶⁾ | 107 | 57 | 86 | 52 |
| Pendelhärte 1 Tag Trocknung 30' 60°C ⁷⁾ | 84 | 60 | 85 | 51 |
| Pendelhärte 3 Tage Trocknung 30' 60°C ⁸⁾ | 113 | 66 | 100 | 64 |
| Pendelhärte 7 Tage Trocknung 30' 60°C ⁹⁾ | 132 | 68 | 115 | 66 |

| | | | | |
|---|---|---|---|---|
| Erläuterungen zu Tabelle 3: ¹⁾ Handelsüblicher Katalysator der Firma King Industries auf Basis eines aminblockierten Phosohorsäureteilesters, 25%ig in Isopropanol ²⁾ Messung der Klebfreiheit mit dem Zappon-Tack Test bei Aufbewahrung der Beschichtung bei Raumtemperatur ³⁾ Messung der Klebfreiheit mit dem Zappon-Tack Test Härtung der Beschichtung 30 min bei 60°C und anschließende Aufbewahrung der Beschichtung bei Raumtemperatur ⁴⁾ Messung der Pendelhärte nach Lagerung der Beschichtung 1 Tag bei Raumtemperatur ⁵⁾ Messung der Pendelhärte nach Lagerung der Beschichtung 3 Tage bei Raumtemperatur ⁶⁾ Messung der Pendelhärte nach Lagerung der Beschichtung 7 Tage bei Raumtemperatur ⁷⁾ Messung der Pendelhärte nach Härtung der Beschichtung für 30 min bei 60°C und anschließende Lagerung der Beschichtung 1 Tag bei Raumtemperatur ⁸⁾ Messung der Pendelhärte nach Härtung der Beschichtung für 30 min bei 60°C und anschließende Lagerung der Beschichtung 3 Tage bei Raumtemperatur ⁹⁾ Messung der Pendelhärte nach Härtung der Beschichtung für 30 min bei 60°C und anschließende Lagerung der Beschichtung 7 Tage bei Raumtemperatur | | | | |

### Diskussion der Prüfergebnisse:

Der Vergleich der Beispiele zeigt deutlich den Einfluß der zur Herstellung der Bindemittel eingesetzten Monomeren mit Alkoxysilylgruppen. So zeigt der Vergleich des Beispiels 1 mit dem Vergleichsbeispiel V1, dass die alpha-Silane eine deutlich höhere Reaktivität als die vergleichbaren gamma-Silane aufweisen. Das zeigt sich insbesondere im Erreichen der Klebfreiheit (ZTT-Test) und der höheren Endhärte nach 7 Tagen Lagerung.

Trotz dieser hohen Reaktivität der alpha-Silane gelingt es aber erfindungsgemäß, Bescritchtungsmittel mit einem ausreichende Potlife zur Verfügung zu stellen, wie die erfindungsgemäßen Beispiele 1 bis 3 zeigen.

Aufgrund der höheren Reaktivität der alpha-Silane gelingt es außerdem, erfindungsgemäß Beschichtungsmittel zur Verfügung zu stellen, die bei der Aushärtung kein toxikologisch bedenkliches Methanol abspalten, sondern durch Verwendung der alpha-Ethoxysilane wird vielmehr bei der Aushärtung Ethanol abgespalten. Diese Beschichtungsmittel auf der Basis von alpha-Ethoxysilanen zeigen dabei trotz der theoretisch geringeren Reaktivität der Ethoxysilylgruppen im Vergleich zu Methoxysilylgruppen eine überraschend hohe Reaktivität und entsprechend auch eine gute Aushärtung bei Raumtemperatur, wie die erfindungsgemäßen Beispiele 1 und 2 zeigen.

### 3. Herstellung der erfndungsgemäßen Beschichtungsmittel der Beispiele 4 bis 6 und der Beschichtungsmittels der Vergleichsbeispiele V2 bis V7 und daraus hergestellte Beschichtungen

Aus den in Tabelle 4 angegebenen Komponenten werden durch Vermischen die Beschichtungsmittel der erfindungsgemäßen Beispiele 4 bis 6 und der Vergleichsbeispiele V2 bis V7 hergestellt. Die verwendeten Katalysatorlösungen werden dabei folgendermaßen erhalten:
Herstellung des Katalysatorsalzes K1: (mit Triethylamin blockiertes Bis-2-ethylhexylphosphat):
   In einem 100 ml Dreihalskolben mit Rührmagnet, Innenthermometer und Tropftrichter werden 14,68g Triethylamin, 13,75g Methylisobutylketon und 27,32 g Ethylacetat vorgelegt. Unter Rühren und Kühlung werden langsam 44,25 g Bis-2-ethylhexylphosphat so zugetropft, dass die Temperatur 50°C nicht überschreitet. Man hält noch weitere 2h bei 50°C, anschließend werden die Prozeßlösemittel in einem Rotationsverdampfer abdestilliert und der Rückstand mit Isopropanol zu einem Feststoffgehalt von 25% angelöst.
Herstellung des Katalysatorsalzes K2 (mit DABCO blockiertes Bis-2-ethylhexylphosphat):
   In einem 100 ml Dreihalskolben mit Rührmagnet, Innenthermometer und Tropftrichter werden 13,25g Diazabicyclo[2.2.2]octan (DABCO), 16,9g Methylisobutylketon und 33,59 g Ethylacetat vorgelegt. Unter Rühren und Kühlung werden langsam 36,26 g Bis-2-ethylhexylphosphat so zugetropft, dass die Temperatur 50°C nicht überschreitet, Man hält noch weitere 2h bei 50°C, anschließend werden die Prozesslösemittel in einem Rotationsverdampfer abdestilliert und der Rückstand mit Isopropanol zu einem Feststoffgehalt von 25% angelöst.

**Tabelle 4: Zusammensetzung der Beschichtungsmittel in Gew.-Teilen und Prüfergebnisse der resultierenden Beschichtung**

| Komp. | Bsp. 4 | Bsp. 5 | Bsp. 6 | \/.-b. V2 | V.-b. V3 | V.-b. V4 | V.-b. V5 | V.-b. V6 | Vg-b. V7 |
|---|---|---|---|---|---|---|---|---|---|
| BM (A1) ¹⁾ | 18,3 | 18,3 | 18,3 | 18,3 | 18,3 | 18,3 | 18,3 | 18,3 | 18,3 |
| Propanol | 1 | 0 | 1 | 1 | 1 | 1 | 1 | 1 | 1 |
| Butylacetat | 0,3 | 0,3 | 0,3 | 0,3 | 0,3 | 0,3 | 0,3 | 0,3 | 0,3 |
| Kat. K1 ²⁾ | 0,36 | 0,36 | | | | | | | |
| Kat. K2 ³⁾ | | | 0,36 | | | | | | |
| DBTL ⁴⁾ | | | | 0,36 | | | | | |
| Triethylamin | | | | | 0,09 | | | | |
| DABCO ⁵⁾ | | | | | | 0,36 | | | |
| DBN ⁶⁾ | | | | | | | 0,09 | | |
| DBU ⁷⁾ | | | | | | | | 0,09 | |
| Phosphat. ⁸⁾ | | | | | | | | | 0,09 |
| Potlife | 4h 4min | 2h 30min | >7h | 5min | 4h 12 min | 2h 44 min | 3 min | 5 min | 2h 47 min |
| (ZTT) | 2h 52 min | > 5h | > 6h | > 4h | > 4h | > 4h | 120 min | 120 min | 180 |
| PD 1 Tag RT ⁹⁾ | 103 | 46 | 28 | 49 | 10 | 65 | 66 | 62 | 83 |
| PD 7 Tage RT ¹⁰⁾ | 126 | 122 | 75 | 75 | 13 | 114 | 100 | 101 | 101 |
| PD 1 Tag 30'60°C¹¹⁾ | 86 | 66 | 45 | 64 | 6 | 61 | 100 | 90 | 114 |
| PD 7 Tage 30'6°C¹²⁾ | 100 | 103 | 81 | 78 | 15 | 111 | 111 | 110 | 125 |
| Ausseh. ¹³⁾ | i.O. | i.O. | i.O. | i.O. | i.O. | T.¹⁴⁾ | St.¹⁵⁾ | St.¹⁵⁾ | St.¹⁵⁾ |

| | | | | | | | | | |
|---|---|---|---|---|---|---|---|---|---|
| Erläuterungen zu Tabelle 4: ¹⁾ in Tabelle 1 beschriebenes Bindemittel A1 ²⁾ oben beschriebene 25%ige Katalysatorlösung K1 eines mit Triethylamin blockierten Bis-2-ethylhexylphosphates ³⁾ oben beschriebene 25%ige Katalysatorlösung K2 eines mit DABCO blockierten Bis-2-ethylhexylphosphates ⁴⁾ DBTL = Dibutylzinndilaurat ⁵⁾ DABCO = 1,4-Diazabicyclo(2.2.2)octan ⁶⁾ DBN = 1.5-Diazabicyclo[4.3.0]non-5-en ⁷⁾ DBU = 1,8-Diazabicyclo[5.4.0]undec-7-en ⁸⁾ Bis(2-ethylhexyl)phosphat ⁹⁾ Messung der Pendelhärte nach Lagerung der Beschichtung 1 Tag bei Raumtemperatur ¹⁰⁾ Messung der Pendelhärte nach Lagerung der Beschichtung 7 Tage bei Raumtemperatur ¹¹⁾ Messung der Pendelhärte nach Härtung der Beschichtung für 30 min bei 60°C und anschließende Lagerung der Beschichtung 1 Tag bei Raumtemperatur ¹²⁾ Messung der Pendelhärte nach Härtung der Beschichtung für 30 min bei 60°C und anschließende Lagerung der Beschichtung 7 Tage bei Raumtemperatur ¹³⁾ visuelle Beurteilung ¹⁴⁾ leichte Trübung sichtbar, Kristallisation setzt ein ¹⁵⁾ Beschichtungen zeigen nach der Härtung unerwünschte Oberflächenstrukturen | | | | | | | | | |

### Diskussion der Prüfergebnisse:

Der Vergleich der Beispiele 4 und 6 sowie der Vergleichsbeispiele V2 bis V7 zeigt deutlich den Einfluß der verwendeten Katalysatoren auf die Eigenschaften der Beschichtungsmittel und den daraus hergestellten Beschichtungen.

So führt die erfindungsgemäße Verwendung von aminblockierten Phosphorsäureteilestern gemäß der erfindungsgemäßen Beispiele 4 und 6 zu Beschichtungsmitteln, die eine gute Aushärtung bei gleichzeitig langem Potlife von mehr als 2 h zeigen. Außerdem werden erfindungsgemäße Beschichtungen mit einer hohen Härte und einem sehr guten optischen Gesamteindruck erhalten. Die Verwendung von mit Triethylamin blockierten Phosphorsäureteilestern gemäß erfindungsgemäßem Beispiel 4 ist dabei im Vergleich zur Verwendung von mit DABCO blockierten Phosphorsäureteilestern gemäß Beispiel 6 bevorzugt, da so eine deutlich bessere Aushärtung, aber trotzdem ein sehr gutes Potlife erhalten wird.

Die Verwendung von DBTL, die nebenbei auch aus toxikologischen Gründen weniger erwünscht ist, führt zu Beschichtungsmitteln mit einem völlig unzureichendem Potlife, wie das Vergleichsbeispiel V2 zeigt.

Die alleinige Verwendung von verschiedenen Aminen führt ebenfalls zu Beschichtungsmitteln bzw. Beschichtungen mit inakzetablen Eigenschaften.

So führt die Verwendung von Triethylamin gemäß Vergleichsbeispiel V3 zu Beschichtungsmitteln, die eine völlig unzureichende Härtung aufweisen. So ist die Pendelhärte im Vergleichsbeispiel V3 selbst bei forcierter Trocknung von 30 min bei 60°C und anschließender Lagerung von 7 Tagen bei Raumtemperatur sehr viel zu niedrig und lässt darauf schließen, dass - falls überhaupt von Aushärtung gesprochen werden kann - nur eine minimale Härtung stattgefunden hat, die keinesfalls akzeptabel ist.

Die Verwendung von cyclischen Aminen gemäß der Vergleichsbeispiele V4 bis V6 als Katalysator führt zwar zu Beschichtungsmitteln, die eine gute Aushärtung zeigen, dagegen sind die optischen Eigenschaften der Beschichtungsmittel bzw. der resultierenden Beschichtungen nicht akzeptabel. So führt die Verwendung von DABCO gemäß Vergleichsbeispiel V4 zu trüben Beschichtungsmitteln, während sowohl die Verwendung von DBN gemäß Vergleichsbeispiel V5 als auch die Verwendung von DBU gemäß Vergleichsbeispiel V6 zu Beschichtungen mit einer ausgeprägten Oberflächenstruktur führt. Außerdem führt die Verwendung von DBN und DBU als Katalysator zu Beschichtungsmitteln, die ein völlig unzureichende Potlife zeigen.

Schließlich führt die Verwendung nicht mit Aminen blockierter Phosphorsäureteilester zwar zu Beschichtungsmitteln mit einer guten Aushärtung und einem guten Potlife, allerdings werden auch hier nicht akzeptable Beschichtungen mit einer ausgeprägten Oberflächenstruktur erhalten, wie das Vergleichsbeispiel V7 zeigt.

### 4. Herstellung der Alkoxysilangruppen enthaltenden Bindemittel A5 und A6 (erfindungsgemäß)

Analog zur Herstellung der Bindemittel A1 bis A4 erfolgt die Herstellung der Bindemittel A5 und A6 aus den in Tabelle 5 angegebenen Komponenten, wobei allerdings bei der Herstellung des Bindemittels A6 die Polymerisationstemperatur und die Temperatur bei der Nachpolymerisation nur 140 °C anstelle von 145 °C wie bei der Herstellung der Bindemittel A1 bis A5 beträgt.

**Tabelle 5: Zur Herstellung der Bindemittel A5 und A6 verwendetet Komponenten**

| | | Beispiel 7 (A5) | Beispiel 8 (A6) |
|---|---|---|---|
| | Polymerisationstemperatur | 145 °C | 140 °C |
| | Komponente | Gew.-TI. | Gew.-TI. |
| Vorlage | Solventnaphtha | 42,0 | -- |
| | 1-Methoxi-2-propylacetat | - | 50,0 |
| Monomerenmischung | n-Butylacrylat | 15,0 | 20,0 |
| | n-Butylmethacrylat | 10,0 | -- |
| | Methylmethacrylat | 20,0 | 20,0 |
| | Isobornylmethacrylat | 15,0 | - |
| | Cyclohexylmethacrylat | 10,0 | - |
| | Hexandioldimethacrylat | -- | 10 |
| | Styrol | -- | 10,0 |
| | Geniosil XL 36¹⁾ (Methacryloyloxime-thylentriethoxysilan) | 30,0 | 30,0 |
| Initiatorlösung | di-tert. Butylperoxid | 3,0 | 8,0 |
| | Solventnaphtha | 12,0 | -- |
| | 1-Methoxi-2-propylacetat | -- | 32,0 |

| | | | |
|---|---|---|---|
| Erläuterungen zu Tabelle 5: ¹⁾ Handelsübliches Methacryloyloximethyltriethoxisilan der Firma Wacker-Chemie AG | | | |

**Tabelle 6: Kennzahlen der Bindemittel (A5) und (A6)**

| | Beisiel 7 | Beispiel 8 |
|---|---|---|
| Bindemittel | (A5) | (A6) |
| Festkörper 1h 130°C | 65,4% | 60,86% |
| Viskosität ICI-Platte Kegel ¹⁾ | 2,6 mPa.s | 2,2 mPa.s |
| Mₙ ²⁾ | 1709 Dalton | 3112 Dalton |
| M_{w}²⁾ | 6860 Dalton | 117690 Dalton |

| | | |
|---|---|---|
| Erläuterungen zu Tabelle 6: ¹⁾ Viskosität gemessen bei 23°C mit Hilfe des ICI-Platte-Kegel-Viskosimeters nach der Herstellung der Bindemittel beim in Tabelle 5 angegebenen Festkörpergehalt ("Anfall-Viskosität") ²⁾ gemessen mittels Gelpermeationschromatographie (GPC) gegen einen Polymethylmethacrylatstandard | | |

### 5. Herstellung der erfindungsgemäßen Beschichtungsmittel der Beispiele 7 bis 10 und daraus hergestellte Beschichtungen

Aus den in Tabelle 7 angegebenen Komponenten werden durch Vermischen die Beschichtungsmittel der erfindungsgemäßen Beispiele 7 bis 10 hergestellt. Die so erhaltenen Beschichtungsmittel werden danach direkt auf je 2 Glastafeln mittels eines Kastenrakels in einer Naßfilmdicke von ca 100µm aufgezogen. Eine Glastafel läßt man bei Raumtemperatur lagern, die andere wird nach 15 minütigem Ablüften für 30 Minuten bei 60°C im Umluftofen getrocknet. Die Beurteilung der Lacke geschieht nach den bei den Beispielen 1 bis 6 genannten Kriterien:

**Tabelle 7: Zusammensetzung der Beschichtungsmittel in Gew.- Teilen und Prüfergebnisse der resultierenden Beschichtung**

| Komponente | Beisp. 7 | Beisp. 8 | Beisp. 9 | Beisp. 10 |
|---|---|---|---|---|
| Bindemittel (A5) | 10,0 | | 10,0 | |
| Bindemittel (A6) | | 10,0 | | 10,0 |
| Katalysator K2 ¹⁾ | 0,26 | 0,26 | 0,26 | 0,26 |
| Lichtschutzmittel ²⁾ | 0,22 | 0,22 | | |
| Verlaufsmittel ³⁾ | 0,02 | 0,02 | | |
| Verlaufsmittel ⁴⁾ | 0,05 | 0,05 | 0,05 | 0,05 |
| Butylacetat | 0,15 | 0,15 | 0,15 | 0,15 |
| Propanol | 0,5 | 0,5 | 0,5 | 0,5 |
| Potlife | > 4h | 35 min | > 4h | 60 min |
| (ZTT) RT ⁵⁾ | 120 min | 120 min | 120 min | 120 min |
| Pendelh. 1 Tag RT ⁶⁾ | 82 | 54 | 54 | 46 |
| Pendelh. 7 Tage RT ⁷⁾ | 98 | 66 | 63 | 51 |
| Pendelhärte 1 Tag Trocknung 30' 60°C ⁸⁾ | 75 | 51 | 58 | 54 |
| Pendelhärte 7 Tage Trocknung 30' 60°C ⁹⁾ | 85 | 54 | 66 | 53 |

| | | | | |
|---|---|---|---|---|
| Erläuterungen zu Tabelle 7: ¹⁾ oben beschriebene 25%ige Katalysatorlösung K2 eines mit DABCO blockierten Bis-2-ethylhexylphosphates ²⁾ handelsübliches Lichtschutzmittel auf Basis von 60 Teilen eines Gemisches aus Lichtschutzmitteln auf Basis sterisch gehinderter Amine (HALS) und 40Teilen eines UV-Absorbers, 97%ig in 1-Methoxi-2-propylacetat ³⁾ handelsübliches Verlaufsmittel auf Basis eines polyethermodifizierten Polydimethylsiloxans ⁴⁾ handelsübliches Verlaufsmittel auf Basis eines Polyacrylatcopolymers, 52 %ig in Solventnaphtha ⁵⁾ Messung der Klebfreiheit mit dem Zappon-Tack Test bei Aufbewahrung der Beschichtung bei Raumtemperatur ⁶⁾ Messung der Pendelhärte nach Lagerung der Beschichtung 1 Tag bei Raumtemperatur ⁷⁾ Messung der Pendelhärte nach Lagerung der Beschichtung 7 Tage bei Raumtemperatur ⁸⁾ Messung der Pendelhärte nach Härtung der Beschichtung für 30 min bei 60°C und anschließende Lagerung der Beschichtung 1 Tag bei Raumtemperatur ⁹⁾ Messung der Pendelhärte nach Härtung der Beschichtung für 30 min bei 60°C und anschließende Lagerung der Beschichtung 7 Tage bei Raumtemperatur | | | | |

## Patentansprüche

1. Feuchtigkeitshärtende Beschichtungsmittel auf Basis aprotischer Lösemittel, enthaltend (A) mindestens ein Bindemittel mit Alkoxysilangruppen und (B) mindestens einen Vernetzungskatalysator, **dadurch gekennzeichnet, dass** es
als Bindemittel (A) mindestens ein Polyacrylat und/oder Polymethacrylat, das erhältlich ist unter Verwendung eines oder mehrerer ethylenisch ungesättigter Monomerer (a1) der Formel (I) 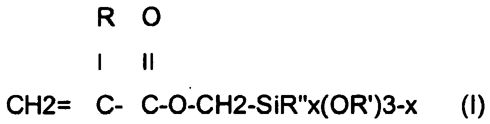 mit
R = Wasserstoff oder Methylrest,
R' = Wasserstoff, Alkyl oder Cycloalkyl
R" = Alkyl, Cycloalkyl, Aryl, oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl,
x=0 bis 2,
und
als Vernetzungskatalysator mindestens einen phosphor- und stickstoffhaltigen Katalysator (B),
enthält.

2. Beschichtungsmittel nach Anspruch 1, **dadurch gekennzeichnet, dass** es als Bindemittel (A) mindestens ein Polyacrylat und/oder Polymethacrylat enthält, das erhältlich ist unter Verwendung eines oder mehrerer ethylenisch ungesättigter Monomerer der Formel (II) 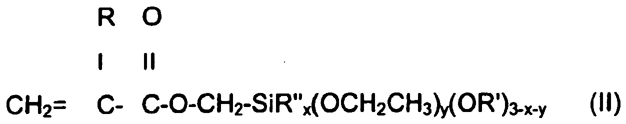 wobei R, R' und R" die bei Formel (I) angegebene Bedeutung haben und
x = 0 bis 2,
y = 1 bis 3, und
1 < x + y < 3 ist.

3. Beschichtungsmittel nach Anspruch 2, **dadurch gekennzeichnet, dass** das ethylenisch ungesättigte Monomer der Formel (II) ausgewählt ist aus der Gruppe alpha-Methacryloxymethyldiethoxymethylsilan, alpha-Methacryloxymethyltriethoxysilan, alpha-Acryloxymethyldiethoxymethylsilan und/oder alpha-Acryloxymethyltriethoxysilan.

4. Beschichtungsmittel nach einem der Ansprüche 1 bis 3, **dadurch gekennzeichnet, dass** das Bindemittel (A) mit Alkoxysilangruppen erhältlich ist durch Polymerisation von
(a1) 10 bis 50 Gew.-% eines oder mehrerer ethylenisch ungesättigter Monomerer (a1) der Formel (I) und/oder der Formel (II),
(a2) 15 bis 85 Gew.-% eines oder mehrerer Alkylester von ethylenisch ungesättigten Carbonsäuren,
(a3) 0 bis 50 Gew.-% eines oder mehrerer, vinylaromatischer Verbindungen
(a4) 0 bis 20 Gew.-% eines oder mehrerer ethylenisch ungesättigter Monomerer mit mindestens zwei polymerisierbaren, ethylenisch ungesättigten Doppelbindungen und
(a5) 0 bis 40 Gew.-% eines oder mehrerer weiterer, von den Monomeren (a1) bis (a4) verschiedener ethylenisch ungesättigter Verbindungen,
wobei die Summe der Gewichtsanteile der Monomeren (a1) bis (a5) jeweils 100 Gew.-% ergibt.

5. Beschichtungsmittel nach einem der Ansprüche 1 bis 4, **dadurch gekennzeichnet, dass** es 70,0 bis 99,0 Gew.-%, jeweils bezogen auf das Gewicht der nicht flüchtigen Bestandteile des erfindungsgemäßen Beschichtungsmittels, mindestens eines Bindemittels (A) und/oder dass es 0,1 bis 10,0 Gew.-%, jeweils bezogen auf das Gewicht der nicht flüchtigen Bestandteile des erfindungsgemäßen Beschichtungsmittels, mindestens eines Katalysators (B) enthält.

6. Beschichtungsmittel nach einem der Ansprüche 1 bis 5, **dadurch gekennzeichnet, dass** der Katalysator (B) ausgewählt ist aus der Gruppe der aminblockierten substituierten Phosphonsäurediester und/oder aminoblockierten substituierten Diphosphonsäurediester, aminblockierten substituierten Phosphorsäuremonoester und/oder aminblockierten substituierten Phosphorsäurediester und/oder aminblockierten substituierten Phosphorsäuretriester.

7. Beschichtungsmittel nach einem der Ansprüche 1 bis 6, **dadurch gekennzeichnet, dass** es als Katalysator (B) mindestens einen mit einem gesättigten tertiären Amin blockierten substituierten Phosphonsäurediester und/oder Diphosphonsäurediester und/oder Phosphorsäuremonoester und/oder Phosphorsäurediester enthält.

8. Beschichtungsmittel nach einem der Ansprüche 1 bis 7, **dadurch gekennzeichnet, dass** es zusätzlich einen oder mehrere, vom Lösemittel verschiedene aliphatische Monoalkohole (C) enthält.

9. Beschichtungsmittel nach einem der Ansprüche 1 bis 8, **dadurch gekennzeichnet, dass** es 0 bis 20 Gew.-%, jeweils bezogen auf das Gewicht der nicht flüchtigen Bestandteile des erfindungsgemäßen Beschichtungsmittels, mindestens eines aliphatischen Monoalkohols (C) enthält.

10. Beschichtungsmittel nach einem der Ansprüche 1 bis 9, **dadurch gekennzeichnet, dass** es transparent ist.

11. Verfahren zur Herstellung einer Mehrschichtlackierung, bei dem auf ein gegebenenfalls vorbeschichtetes Substrat eine pigmentierte Basislackschicht und danach eine Klarlackschicht aufgetragen wird, **dadurch gekennzeichnet, dass** die Klarlackschicht eine Schicht aus dem Beschichtungsmittel nach einem der Ansprüche 1 bis 10 ist.

12. Verfahren nach Anspruch 11, **dadurch gekennzeichnet, dass** die Mehrschichtlackierung eine Reparaturlackierung oder eine Nutzfahrzeuglackierung oder eine Lackierung von Kunststoffformteilen oder Kunststoff-Anbauteilen ist.

13. Anwendung des Verfahrens nach Anspruch 11 oder 12 zur Beschichtung von Karosserie-Innen- oder - Außenbauteilen oder von Bauteilen für den Schiff- und Flugzeugbau oder von Bauteilen für Haushalts- und Elektrogeräte oder von Kunststoffformteilen oder Folien.

## Claims

1. Moisture-curing coating compositions based on aprotic solvents, comprising (A) at least one binder having alkoxysilane groups and (B) at least one crosslinking catalyst, **characterized in that** said composition comprises
as binder (A) at least one polyacrylate and/or polymethacrylate which is obtainable using one or more ethylenically unsaturated monomers (a1) of the formula (I) 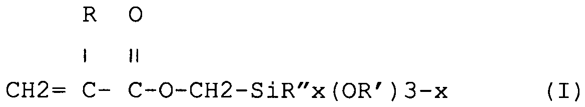 with
R = hydrogen or methyl radical,
R' = hydrogen, alkyl or cycloalkyl, and
R" = alkyl, cycloalkyl, aryl or aralkyl, it being possible for the carbon chain to be interrupted by nonadjacent oxygen groups, sulfur groups or groups NRa, with Ra = alkyl, cycloalkyl, aryl or aralkyl, and
x = 0 to 2,
and
as crosslinking catalyst at least one phosphorus- and nitrogen-containing catalyst (B).

2. Coating composition according to Claim 1, **characterized in that** said composition comprises as binder (A) at least one polyacrylate and/or polymethacrylate which is obtainable using one or more ethylenically unsaturated monomers of the formula (II) 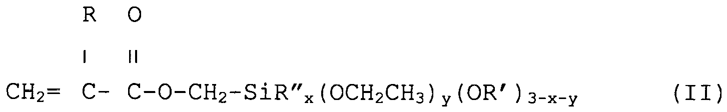 where R, R' and R" have the definition indicated for formula (I) and
x = 0 to 2,
y = 1 to 3, and
1 < x + y < 3.

3. Coating composition according to Claim 2, **characterized in that** the ethylenically unsaturated monomer of the formula (II) is selected from the group of alpha-methacryloyloxymethyldiethoxymethylsilane, alpha-methacryloyloxymethyltriethoxysilane, alpha-acryloyloxymethyldiethoxymethylsilane and/or alpha-acryloyloxymethyltriethoxysilane.

4. Coating composition according to any of Claims 1 to 3, **characterized in that** the binder (A) having alkoxysilane groups is obtainable by polymerizing
(a1) 10% to 50% by weight of one or more ethylenically unsaturated monomers (a1) of the formula (I) and/or of the formula (II),
(a2) 15% to 85% by weight of one or more alkyl esters of ethylenically unsaturated carboxylic acids,
(a3) 0% to 50% by weight of one or more vinylaromatic compounds,
(a4) 0% to 20% by weight of one or more ethylenically unsaturated monomers having at least two polymerizable, ethylenically unsaturated double bonds, and
(a5) 0% to 40% by weight of one or more further ethylenically unsaturated compounds different from the monomers (a1) to (a4),
the sum of the weight fractions of the monomers (a1) to (a5) making 100% by weight in each case.

5. Coating composition according to any of Claims 1 to 4, **characterized in that** said composition contains 70.0% to 99.0% by weight, based in each case on the weight of the nonvolatile constituents of said composition, of at least one binder (A), and/or **in that** said composition contains 0.1% to 10.0% by weight, based in each case on the weight of the nonvolatile constituents of said composition, of at least one catalyst (B).

6. Coating composition according to any of Claims 1 to 5, **characterized in that** the catalyst (B) is selected from the group of amine-blocked substituted phosphonic diesters and/or amino-blocked substituted diphosphonic diesters, amine-blocked substituted phosphoric monoesters and/or amine-blocked substituted phosphoric diesters and/or amine-blocked substituted phosphoric triesters.

7. Coating composition according to any of Claims 1 to 6, **characterized in that** said composition comprises as catalyst (B) at least one substituted phosphonic diester and/or diphosphonic diester and/or phosphoric monoester and/or phosphoric diester which is blocked with a saturated tertiary amine.

8. Coating composition according to any of Claims 1 to 7, **characterized in that** said composition further comprises one or more aliphatic monoalcohols (C) which are different from the solvent.

9. Coating composition according to any of Claims 1 to 8, **characterized in that** said composition contains 0% to 20% by weight, based in each case on the weight of the nonvolatile constituents of said composition, of at least one aliphatic monoalcohol (C).

10. Coating composition according to any of Claims 1 to 9, **characterized in that** said composition is transparent.

11. Method of producing a multicoat finish, by applying to an unprecoated or precoated substrate a pigmented basecoat and thereafter a clearcoat, **characterized in that** the clearcoat is a coat of the coating composition according to any of Claims 1 to 10.

12. Method according to Claim 11, **characterized in that** the multicoat finish is a refinish or a utility-vehicle finish, or a finish on plastics moldings or plastics components for surface mounting.

13. Use of the method according to Claim 11 or 12 to coat interior or exterior bodywork components or to coat components for shipbuilding and aircraft construction or to coat components for household and electrical appliances or to coat plastics moldings or films.

## Revendications

1. Agent de revêtement durcissant à l'humidité à base de solvants aprotiques, contenant (A) au moins un liant contenant des groupes alcoxysilane et (B) au moins un catalyseur de réticulation, **caractérisé en ce qu'**il contient
en tant que liant (A) au moins un polyacrylate et/ou polyméthacrylate, qui peut être obtenu en utilisant un ou plusieurs monomères éthyléniquement insaturés (a1) de formule (I) 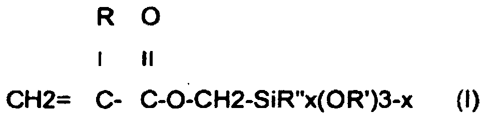 avec
R = hydrogène ou radical méthyle,
R' = hydrogène, alkyle ou cycloalkyle,
R" = alkyle, cycloalkyle, aryle ou aralkyle, la chaîne carbonée pouvant être interrompue par des groupes oxygène, soufre ou NRa non voisins, avec Ra = alkyle, cycloalkyle, aryle ou aralkyle,
x = 0 à 2,
et
en tant que catalyseur de réticulation au moins un catalyseur contenant du phosphore et de l'azote (B).

2. Agent de revêtement selon la revendication 1, **caractérisé en ce qu'**il contient en tant que liant (A) au moins un polyacrylate et/ou un polyméthacrylate qui peut être obtenu en utilisant un ou plusieurs monomères éthyléniquement insaturés de formule (II) 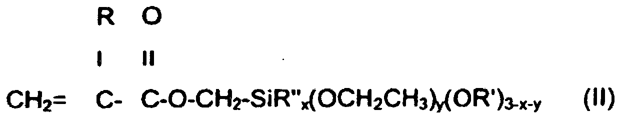 dans laquelle R, R' et R" ont la signification indiquée pour la formule (I) et
x = 0 à 2,
y = 1 à 3 et
1 < x+y < 3.

3. Agent de revêtement selon la revendication 2, **caractérisé en ce que** le monomère éthyléniquement insaturé de formule (II) est choisi dans le groupe constitué par l'alpha-méthacryloxyméthyldiéthoxyméthylsilane, l'alpha-méthacryloxyméthyltriéthoxysilane, l'alpha-acryloxyméthyldiéthoxyméthylsilane et/ou d'alpha-acryloxyméthyltriéthoxysilane.

4. Agent de revêtement selon l'une quelconque des revendications 1 à 3, **caractérisé en ce que** le liant (A) contenant des groupes alcoxysilane peut être obtenu par polymérisation de
(a1) 10 à 50 % en poids d'un ou de plusieurs monomères éthyléniquement insaturés (a1) de formule (I) et/ou de formule (II),
(a2) 15 à 85 % en poids d'un ou de plusieurs esters alkyliques d'acides carboxyliques éthyléniquement insaturés,
(a3) 0 à 50 % en poids d'un ou de plusieurs composés aromatiques de vinyle,
(a4) 0 à 20 % en poids d'un ou de plusieurs monomères éthyléniquement insaturés contenant au moins deux doubles liaisons éthyléniquement insaturées polymérisables, et
(a5) 0 à 40 % en poids d'un ou de plusieurs autres composés éthyléniquement insaturés différents des monomères (a1) à (a4),
la somme des proportions en poids des monomères (a1) à (a5) étant à chaque fois de 100 % en poids.

5. Agent de revêtement selon l'une quelconque des revendications 1 à 4, **caractérisé en ce qu'**il contient 70,0 à 99,0 % en poids, à chaque fois par rapport au poids des constituants non volatils de l'agent de revêtement selon l'invention, d'au moins un liant (A) et/ou **en ce qu'**il contient 0,1 à 10,0 % en poids, à chaque fois par rapport au poids des constituants non volatils de l'agent de revêtement selon l'invention, d'au moins un catalyseur (B).

6. Agent de revêtement selon l'une quelconque des revendications 1 à 5, **caractérisé en ce que** le catalyseur (B) est choisi dans le groupe des diesters d'acide phosphonique substitués amino-bloqués et/ou des diesters d'acide diphosphonique substitués amino-bloqué, des monoesters d'acide phosphorique substitués amino-bloqués et/ou des diesters d'acide phosphorique substitués amino-bloqués et/ou des triesters d'acide phosphorique substitués amino-bloqués.

7. Agent de revêtement selon l'une quelconque des revendications 1 à 6, **caractérisé en ce qu'**il contient en tant que catalyseur (B) au moins un diester d'acide phosphonique et/ou un diester d'acide diphosphonique et/ou un monoester d'acide phosphorique et/ou un diester d'acide phosphorique substitué bloqué avec une amine tertiaire saturée.

8. Agent de revêtement selon l'une quelconque des revendications 1 à 7, **caractérisé en ce qu'**il contient également un ou plusieurs monoalcools aliphatiques (C) différents du solvant.

9. Agent de revêtement selon l'une quelconque des revendications 1 à 8, **caractérisé en ce qu'**il contient 0 à 20 % en poids, à chaque fois par rapport au poids des constituants non volatils de l'agent de revêtement selon l'invention, d'au moins un monoalcool aliphatique (C).

10. Agent de revêtement selon l'une quelconque des revendications 1 à 9, **caractérisé en ce qu'**il est transparent.

11. Procédé de fabrication d'un laquage multicouche, selon lequel une couche de laque de base pigmentée, puis une couche de laque transparente sont appliquées sur un substrat éventuellement pré-revêtu, **caractérisé en ce que** la couche de laque transparente est une couche de l'agent de revêtement selon l'une quelconque des revendications 1 à 10.

12. Procédé selon la revendication 11, **caractérisé en ce que** le laquage multicouche est un laquage de réparation ou un laquage de véhicule utilitaire ou un laquage de pièces moulées en plastique ou de composants en plastique.

13. Utilisation du procédé selon la revendication 11 ou 12 pour le revêtement de composants intérieurs ou extérieurs de carrosseries ou de composants pour la construction de navires et d'avions ou de composants d'appareils ménagers ou électriques ou de pièces moulés en plastique ou de feuilles.
